# EUROPEAN PATENT APPLICATION

(11) **EP 3 373 197 A1**
(43) Date of publication of application: **12.09.2018**
(21) Application number: 18000141.4
(22) Date of filing: 14.02.2018
(51) Int. Cl.: G06K 9/00, G06K 9/46, G06K 9/56, G06K 9/62, G06K 9/68

(54) **IMAGE PROCESSING APPARATUS, IMAGE PROCESSING METHOD, TEMPLATE GENERATION APPARATUS, OBJECT RECOGNITION PROCESSOR, AND OBJECT RECOGNITION PROCESSING PROGRAM**

(30) Priority: 10.03.2017 JP 2017046114
(71) Applicant: OMRON CORPORATION, Kyoto-shi, Kyoto 600-8530 (JP)
(72) Inventor: Konishi, Yoshinori, Kyoto-shi, Kyoto, 600-8530 (JP)
(74) Representative: Müller-Boré & Partner Patentanwälte PartG mbB

(57) **Abstract**

A technique enables faster matching in object recognition using template matching. A standard template generation unit (202) generates a plurality of standard templates with different resolutions for different layers. An identification template generation unit (203) generates, for each layer, a common template that represents a common part of the plurality of standard templates, and identification templates that represent differences between the plurality of templates. Matching in a higher level layer uses the standard templates. Matching in a lower level layer uses the common template representing a common part of the templates and the identification templates representing differences between the templates.

## Description

### FIELD

The present invention relates to a technique for detecting a target object in an image using template matching.

### BACKGROUND

Template matching is a method for detecting a target object in an object recognition image. In template matching, a model (template) for an object to be detected is prepared, and a template image is manipulated within an input image to calculate the similarities between the template image and the input image at different positions in the input image and evaluate the calculated similarities to detect the position and posture of the object in the image. Object detection by template matching is used in, for example, inspection and picking in factory automation (FA), robot vision, and monitoring cameras. Recent template matching for detecting the position and posture of a target object has shifted from two-dimensional (2D) measurement to more advanced, three-dimensional (3D) measurement.

Matching using a search has been developed as template matching using three-dimensional measurement. In the search, individual templates for postures viewed from different points are prepared, and matching with each of these templates is performed. However, this method uses far more templates than matching using two-dimensional measurement, and increases the processing time (refer to, for example, Patent Literature 1).

Template matching using a coarse-to-fine search is known to overcome this issue. The coarse-to-fine search is a technique for speeding up the search performed in template matching. The coarse-to-fine search uses an image set (or image pyramid) including images having resolutions that differ from one image to another in a stepwise manner. This technique coarsely searches a lower-resolution image to narrow the search scope based on the search results, and further searches a higher-resolution image within the narrowed search scope repeatedly until the position and posture of a target object are detected in the original-resolution image.

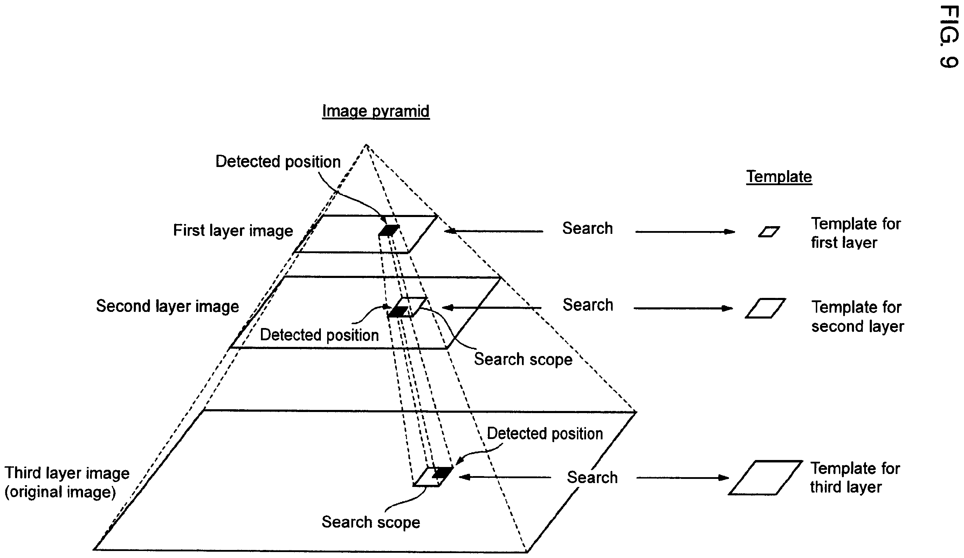

Fig. 9 is a diagram showing the basic concept of a coarse-to-fine search using an image pyramid.

As shown in Fig. 9, the coarse-to-fine search uses an image set (image pyramid) including first to k-th image layers (k is an integer greater than or equal to 2) having resolutions that differ from one image to another in a stepwise manner. The first layer has the lowest resolution, and the second to the k-th layers have their resolutions increasing sequentially in the order of the layers. In Fig. 9, k = 3, and the third layer represents the original image, and the second layer and the first layer have their resolutions decreasing in this order.

In the coarse-to-fine search, a first layer image with the lowest resolution is first searched through template matching to detect the position of an object (match candidate) in the first layer (refer to a detected position in the first layer image in Fig. 9). A second layer is next searched. In this search, a second layer image area corresponding to the detected position in the first layer is defined as a search scope, and this area is searched (refer to a detected position in the second layer image in Fig. 9). In the same manner, a search scope is defined in a third layer using the detection result obtained for the second layer. The defined search scope is searched to detect the position of the object in the third layer (original image) (refer to a detected position in the third layer image in Fig. 9).

In this manner, the search scope is narrowed stepwise from an image with a lower resolution (or lower-resolution image) toward an image with a higher resolution (or higher-resolution image) in this manner to reduce the number of times template matching is performed, and shorten the processing time.

### CITATION LIST

### PATENT LITERATURE

Patent Literature 1: Japanese Unexamined Patent Application Publication No. 2016-207147

### SUMMARY

### TECHNICAL PROBLEM

However, the coarse-to-fine search uses more templates for matching (or match candidate templates) as the search proceeds from a lower-resolution image to a higher-resolution image. Although narrowing the search scope can shorten the processing time, the search involves matching performed a greater number of times for each higher-resolution image, increasing the processing time for matching. Thus, the coarse-to-fine search may not sufficiently shorten the total processing time.

In response to the above issue, one or more aspects of the present invention are directed to a technique for enabling faster matching in object recognition using template matching.

### SOLUTION TO PROBLEM

One aspect of the present invention provides an image processing apparatus for recognizing an object by template matching. The apparatus includes an image obtaining unit that obtains an input image of the object, a standard template generation unit that generates a plurality of standard templates corresponding to the object viewed from different points, an identification template generation unit that generates a plurality of identification templates representing differences between the plurality of standard templates, and a template matching unit that performs matching of the input image of the object with the plurality of identification templates.

The apparatus with the above structure uses the plurality of standard templates corresponding to the object viewed from different points to generate identification templates representing differences between the plurality of standard templates, and performs matching using the generated plurality of identification templates. The matching using the identification templates that represent only the differences between the plurality of standard templates enables faster processing than matching using the standard templates.

In the apparatus according to the above aspect, the identification template generation unit may generate, in addition to the plurality of identification templates, a common template representing a common part of the standard templates, and the template matching unit may perform matching of the input image of the object with the generated common template and the plurality of identification templates.

The apparatus according to the above aspect may further include an image pyramid generation unit that generates, from the input image of the object, a plurality of images having resolutions that differ from one image to another in a stepwise manner. The plurality of images include a lower-resolution image having a resolution and a higher-resolution image having a resolution higher than the resolution of the lower-resolution image. The standard template generation unit may generate a plurality of standard templates for a lower resolution corresponding to the lower-resolution image, and a plurality of standard templates for a higher resolution corresponding to the higher-resolution image. The identification template generation unit may generate a plurality of identification templates for the higher resolution based on the plurality of standard templates for the higher resolution. The template matching unit may perform matching of the lower-resolution image with the plurality of standard templates for the lower resolution to narrow match candidate standard templates, defines a search scope in the higher-resolution image based on a result of the narrowing, and perform matching of the higher-resolution image within the defined search scope with the plurality of identification templates for the higher resolution.

The apparatus according to the above aspect may further include a feature extraction unit that extracts a feature quantity from each of the lower-resolution image and the higher-resolution image. The template matching unit may perform matching using the feature quantity of the lower-resolution image and the plurality of standard templates for the lower resolution to narrow match candidate standard templates, define a search scope in the higher-resolution image based on a result of the narrowing, and perform matching using the feature quantity of the higher-resolution image within the defined search scope and the plurality of identification templates for the higher resolution.

The apparatus according to the above aspect may recognize a position of the object by template matching with a coarse-to-fine search.

Another aspect of the present invention provides an image processing method for recognizing an object by template matching. The method includes obtaining an input image of the object, generating a plurality of standard templates corresponding to the object viewed from different points, generating a plurality of identification templates representing differences between the plurality of standard templates, and performing matching of the input image of the object with the plurality of identification templates.

Still another aspect of the present invention provides a program for enabling a computer to implement image processing for recognizing an object by template matching. The program enables the computer to implement obtaining an input image of the object, generating a plurality of standard templates corresponding to the object viewed from different points, generating a plurality of identification templates representing differences between the plurality of standard templates, and performing matching of the input image of the object with the plurality of identification templates.

### ADVANTAGEOUS EFFECTS

The technique according to the aspects of the present invention enables faster matching in object recognition using template matching.

### BRIEF DESCRIPTION OF THE DRAWINGS

Fig. 1 is a diagram showing the overall configuration of an object recognition apparatus.
Fig. 2 is a diagram showing the hardware configuration of the object recognition apparatus.
Fig. 3 is a functional block diagram of the image processing apparatus.
Fig. 4 is a diagram showing an example image captured with a camera.
Fig. 5 is a flowchart showing a template generation process performed by a template generation apparatus.
Fig. 6 is a diagram describing template matching using only standard templates.
Fig. 7 is a diagram describing template matching using standard templates, a common template, and identification templates.
Fig. 8 is a flowchart showing an object recognition process performed by an object recognition processor.
Fig. 9 is a diagram showing the basic concept of a coarse-to-fine search using an image pyramid.

### DETAILED DESCRIPTION

Embodiments of the present invention will now be described with reference to the drawings. The same or corresponding components in the figures are given the same reference numerals, and will not be described repeatedly. The embodiments below are only illustrative in all respects and should not be construed to be restrictive. The embodiments may be modified variously without departing from the spirit and scope of the invention.

### A. Embodiments

### A-1. Overall Configuration of Object Recognition Apparatus

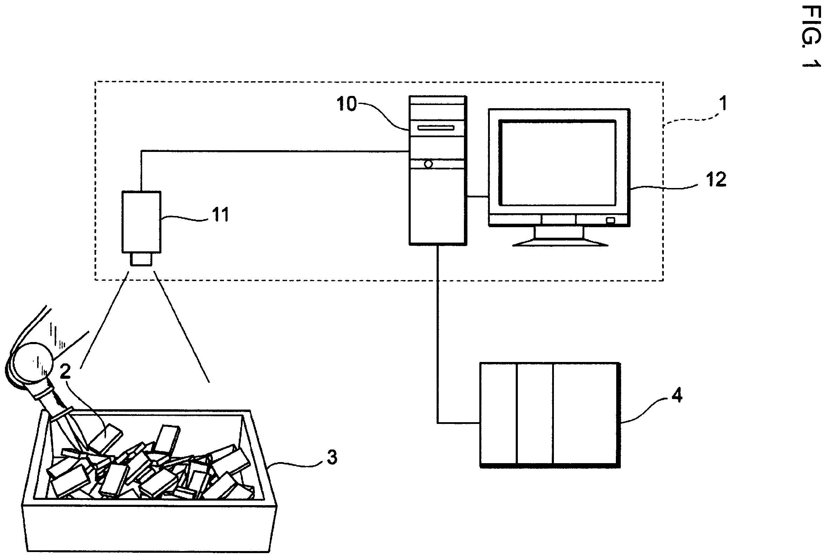

Referring now to Fig. 1, the overall configuration of an object recognition apparatus according to one embodiment of the present invention and its applications will be described.

An object recognition apparatus 1 is a system installed on, for example, a production line including a picking system. The object recognition apparatus 1 performs template matching using images captured with a camera 11 to recognize objects 2 in a tray 3. The objects 2 to be recognized are randomly placed in the tray 3. The object recognition apparatus 1 captures an image with the camera 11 at predetermined time intervals, causes an image processing apparatus 10 to recognize the position and posture of each object 2 included in the image, and outputs the recognition result to, for example, a programmable logic controller (PLC) 4 or to a display 12. The recognition result output from the object recognition apparatus 1 is used in, for example, controlling a picking robot, a machining device, and a printer, or inspecting and measuring the objects 2.

### A-2. Hardware Configuration

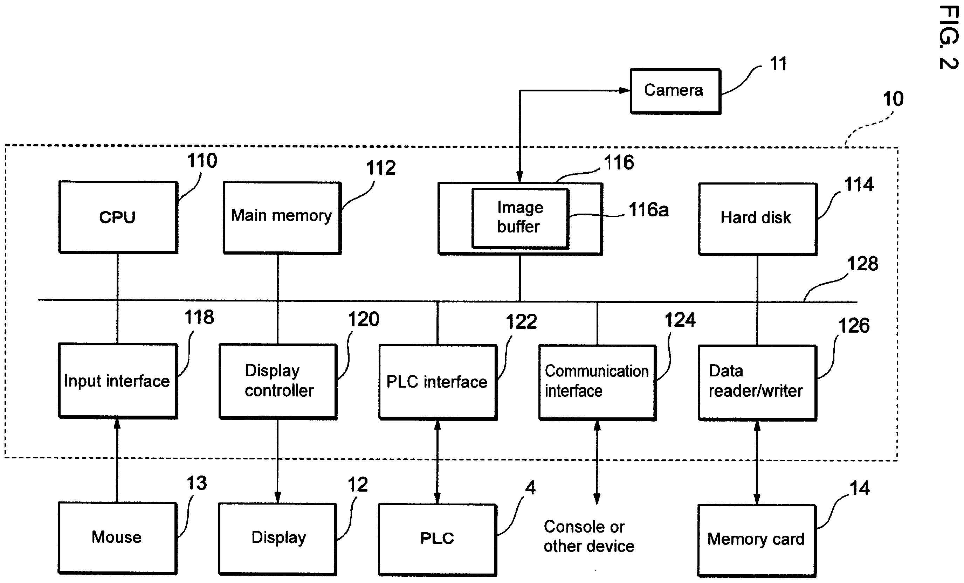

Referring to Fig. 2, the hardware configuration of the object recognition apparatus 1 will now be described. The object recognition apparatus 1 mainly includes the camera 11 and the image processing apparatus 10.

The camera 11 is an imaging device for capturing a digital image of the objects 2, which is read into the image processing apparatus 10. The camera 11 may be a complementary metal-oxide semiconductor (CMOS) camera or a charge-coupled device (CCD) camera. The input image may have any resolution, either color or black-and-white mode, either static or dynamic mode, any gray-scale, and any data format, which may be selected in accordance with the type of the objects 2 and the purpose of sensing. When a special image other than a visible light image, such as an X-ray image or a thermography image, is used for object recognition or inspection, a camera dedicated to the image may be used.

The image processing apparatus 10 includes a central processing unit (CPU) 110, a main memory 112 used as a working memory, a hard disk 114, which is a fixed storage, a camera interface 116, an input interface 118, a display controller 120, a PLC interface 122, a communication interface 124, and a data reader/writer 126. These components are interconnected by a bus 128 to allow data communication between them.

The camera interface 116 allows data transfer between the CPU 110 and the camera 11, and includes an image buffer 116a for temporarily storing image data obtained from the camera 11. The input interface 118 allows data transfer between the CPU 110 and an input unit. The input unit includes a mouse 13, a keyboard, a touch panel, and a jog controller. The display controller 120 is connected to the display 12, such as a liquid crystal monitor, and controls the information that appears on the display. The PLC interface 122 allows data transfer between the CPU 110 and the PLC 4. The communication interface 124 allows data transfer between the CPU 110 and a console or between the CPU 110 and a personal computer or a server. The data reader/writer 126 allows data transfer between the CPU 110 and a memory card 14, which is a recording medium.

The image processing apparatus 10 may be a computer with a general-purpose architecture, in which the CPU 110 reads and executes programs stored in the hard disk 114 or a memory card 14 to provide various functions. Such programs are distributed in the form of computer-readable recording mediums storing them, such as a memory card 14 or an optical disc, or provided through the Internet. The program used in the present embodiment may be provided as a single application program or as a module incorporated in another program. The functions of the program may be partly or entirely replaced by a dedicated circuit such as an application specific integrated circuit (ASIC).

### A-3. Functional Configuration

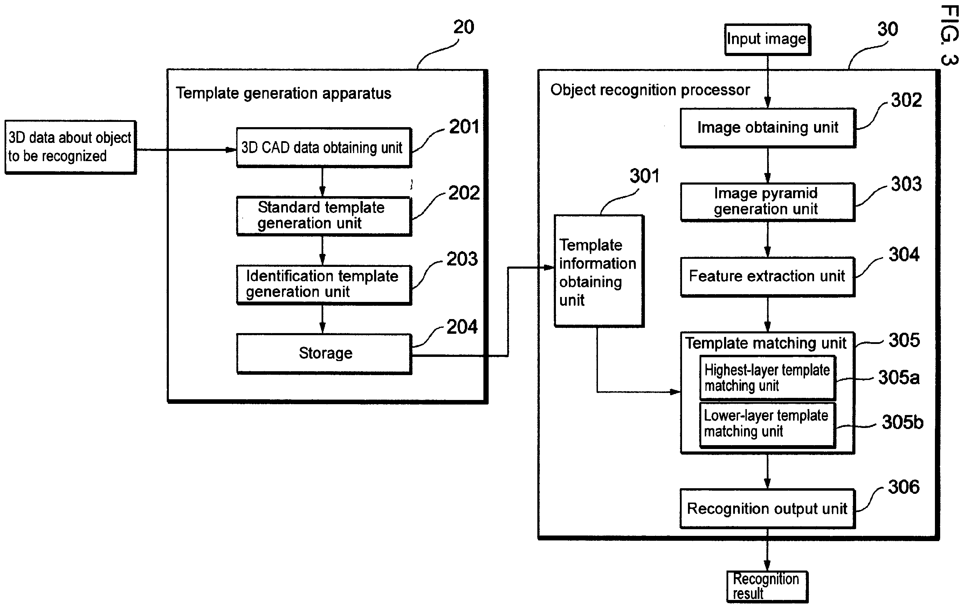

Fig. 3 is a functional block diagram of the image processing apparatus 10. The image processing apparatus 10 includes a functional unit serving as a template generation apparatus 20 and a functional unit serving as an object recognition processor 30.

The template generation apparatus 20 is a functional unit that generates templates to be used in an object recognition process. The template generation apparatus 20 includes a 3D computer-aided design (CAD) data obtaining unit 201, a standard template generation unit 202, an identification template generation unit 203, and a storage 204.

The object recognition processor 30 is a functional unit that recognizes an object in an image captured with the camera 11 by performing template matching of the image with the templates generated by and stored in the template generation apparatus 20. The object recognition processor 30 includes a template information obtaining unit 301, an image obtaining unit 302, an image pyramid generation unit 303, a feature extraction unit 304, a template matching unit 305, and a recognition output unit 306. The functions of the template generation apparatus 20 and the object recognition processor 30 will be described in detail later.

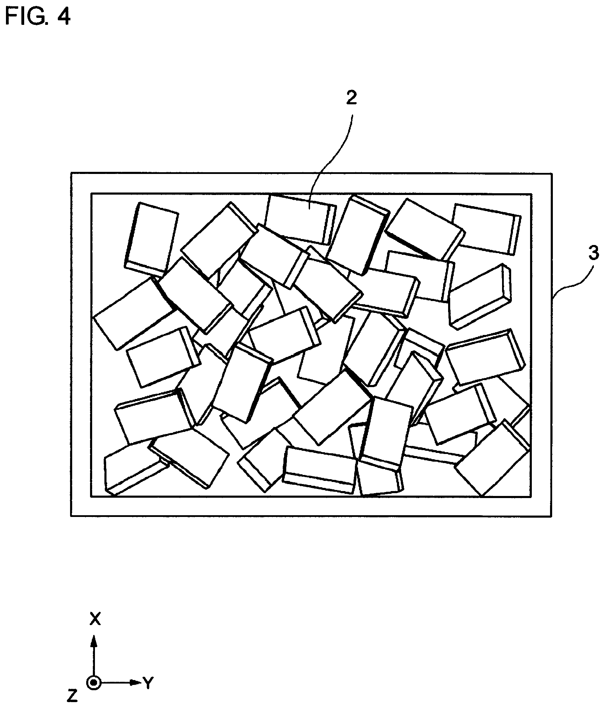

Fig. 4 is a diagram showing an example image captured with the camera 11. As shown in Fig. 4, the image includes a plurality of objects 2, each of which has random positions (XYZ coordinates) and postures (angles to three XYZ axes). Unless an object is a perfect sphere, different object postures (orientations) relative to the camera 11 cause the object to appear differently (e.g., with different shapes and colors) in a captured image. To perform a coarse-to-fine search in template matching in the present embodiment, templates representing different object postures are first prepared for each layer of an image pyramid. A coarse-to-fine search known in the art uses more match candidate templates in searches using higher-resolution images, or a second layer image and a third layer image, although the position and posture of an object are narrowed using a lower-resolution image (e.g., a first layer image). This lowers the processing speed in template matching (refer to the Technical Problem).

The inventor of the present application has noticed that match candidate templates often have similar features in higher-resolution images, which are obtained by narrowing the positions and the postures of the objects using lower-resolution images. The inventor has then focused on generating identification templates that represent differences between the templates to be used in matching in a higher-resolution image (and also a common template that represents a common part of the templates as appropriate), and performing matching using the identification templates. The use of such identification templates increases the processing speed in template matching using higher-resolution images, and thus increases the total processing speed (described in detail later).

### A-4. Template Generation Process

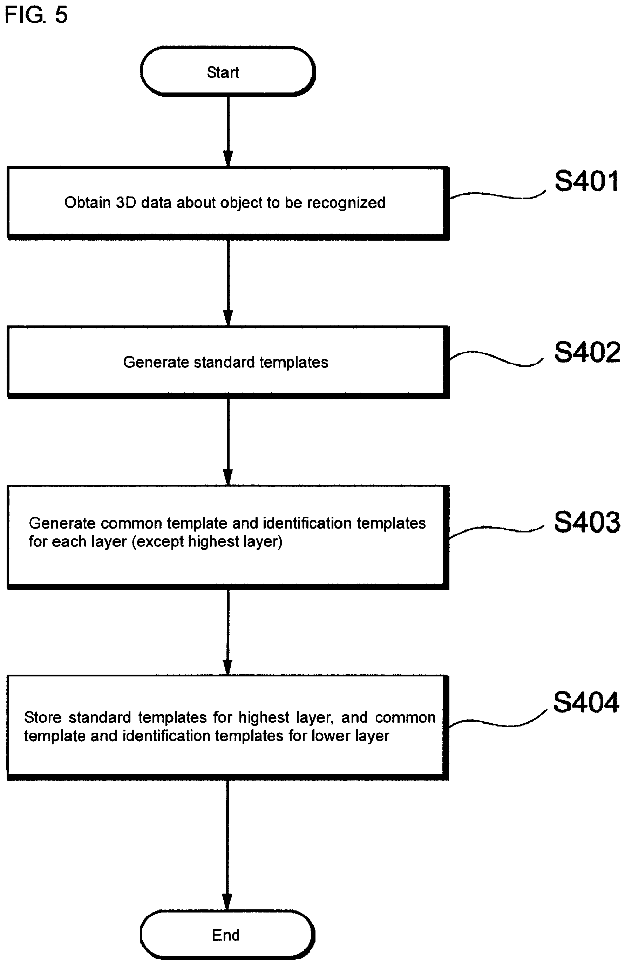

A template generation process performed by the template generation apparatus 20 will now be described with reference to the flowchart shown in Fig. 5.

The 3D CAD data obtaining unit 201 obtains three-dimensional data representing the three-dimensional shape of an object 2 to be recognized (target object) (step S401). The 3D CAD data obtaining unit 201 can obtain any three-dimensional data that allows recognition of the target object 2 as a three-dimensional figure. In the present embodiment, the obtained three-dimensional data is three-dimensional CAD data. The 3D CAD data obtaining unit 201 may obtain the three-dimensional CAD data from an external three-dimensional CAD server or a memory (not shown).

The standard template generation unit 202 generates two-dimensional images of the object 2 viewed from different points using the three-dimensional data obtained by the 3D CAD data obtaining unit 201, and generates a plurality of templates using the generated two-dimensional images (step S402). In the present embodiment, the templates generated by the standard template generation unit 202, which correspond to the images of the object 2 viewed from different points, are referred to as standard templates. The templates are data representing the image features of the object 2 to be recognized. Each template can be in any format such as a feature quantity array of a plurality of feature points in the image.

Examples of the feature quantities include a pixel value (luminance), a luminance gradient orientation, a quantized gradient orientation, histograms of oriented gradients (Hog), HAAR-like, and scale-invariant feature transform (SIFT). The luminance gradient orientation is a continuous-value representation of gradient orientations (angles) of luminance in a local area around a feature point. The quantized gradient orientation is a discrete-value representation of gradient orientations (angles) of the luminance in a local area around a feature point (for example, eight directions are represented by 1-byte information corresponding to 0 to 7).

As described above, the image processing apparatus according to the present embodiment performs a coarse-to-fine search that uses image layers (or an image pyramid) having resolutions that differ from one image to another in a stepwise manner, for each of which base templates are to be generated. The standard template generation unit 202 generates a plurality of standard templates with different resolutions for different layers. The standard templates with different resolutions may be generated from a plurality of object images with different resolutions, or may be generated by using one standard template generated from the object image with the highest resolution and lowering the resolution of that standard template to generate other standard templates with intended resolutions. In this case, the resolution may be lowered by integrating neighboring feature points based on the positional relationship between the feature points. The standard templates with different resolutions may be generated with any methods.

The standard template generation unit 202 generates the plurality of standard templates for each of the image layers having resolutions that differ from one image to another in a stepwise manner, and provides the generated standard templates for each layer to the identification template generation unit 203.

The identification template generation unit 203 generates a common template and identification templates for each layer based on the standard templates for each layer provided by the standard template generation unit 202 (step S403). More specifically, the identification template generation unit 203 generates, for each layer (except the highest first layer), the common template that represents a common part of the plurality of standard templates, and the identification templates that represent differences between the plurality of templates. When the matching for a lower-resolution image using the standard templates produces a reliable matching result (for example, when the matching result has almost no probability of representing an object other than an object included in the higher-resolution image templates, or a background or an unrelated object), the matching using the common template in the lower level layers may be eliminated. In this case, the identification template generation unit 203 may simply generate the identification templates for each layer (except the highest first layer) without generating the common template.

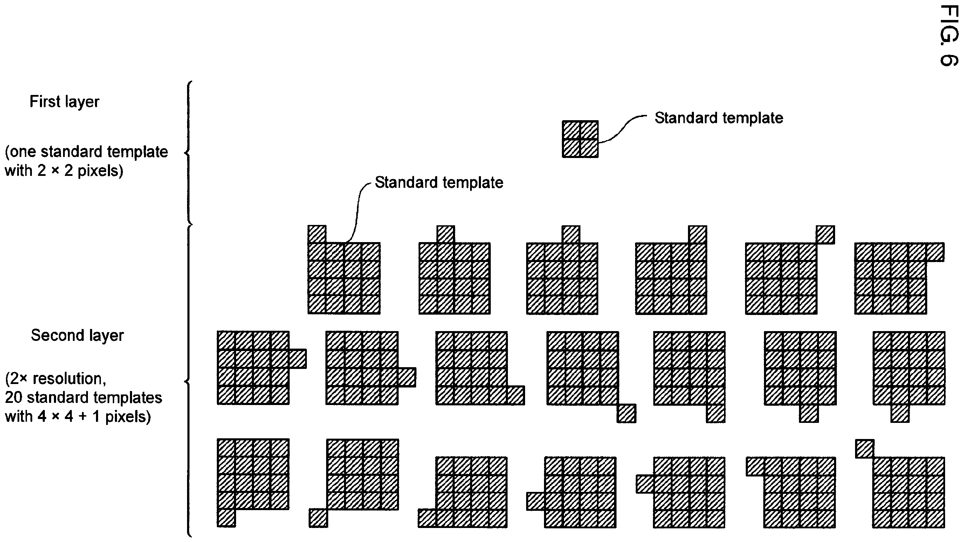

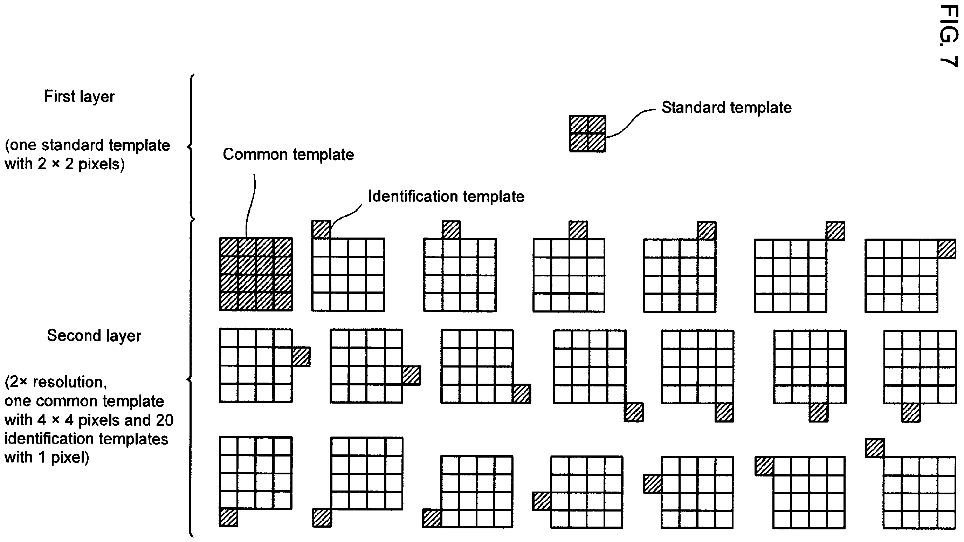

Fig. 6 is a diagram describing template matching using only standard templates (example known in the art), whereas Fig. 7 is a diagram describing template matching using standard templates, a common template, and identification templates (present embodiment). In Figs. 6 and 7, for ease of explanation, the lower-resolution image is the first layer image with the lowest resolution, and the higher-resolution image is the second layer image with the second lowest resolution.

In the example known in the art shown in Fig. 6, when a match candidate template is narrowed to one standard template with 2 × 2 pixels in the first layer image, the second layer image, which has a resolution twice that of the first layer image, undergoes matching with all the standard templates for the second layer, or 20 standard templates. The standard templates for the second layer have 4 × 4 + α(α = 1 in Fig. 6) pixels. The second layer image thus undergoes the matching 340 times, corresponding to 17 (= 4 × 4 + 1) pixels × 20 standard templates.

In the present embodiment shown in Fig. 7, a match candidate template is narrowed in the first layer image to one standard template with 2 × 2 pixels as in the above example known in the art. However, the second layer image undergoes matching with one common template representing a common part (= 4 × 4 pixels) of the 20 standard templates, and 20 identification templates each representing an individual feature (= 1 pixel) of the corresponding standard template. More specifically, the second layer image may undergo the matching 36 times, corresponding to 16 (= 4 × 4) pixels + 20 (1 pixel × 20 identification templates). This shortens the processing time to about one tenth of the example known in the art, which needs matching 340 times.

As described above, in the coarse-to-fine search, the lower level layers have detection candidates determined by narrowing the candidates in the upper layer images (lower-resolution images). In other words, the lower level layers include no unrelated detection candidate. The template matching in the lower level layers (higher-resolution images) may be handled as a classification problem (identification problem), and thus use various identification techniques with learning samples (e.g., Fisher's linear discriminant, logistic regression, support vector machine (SVM), random forests, support vector machine, and neural networks). In the template matching performed in the present embodiment, detection candidates are narrowed in the upper layer images (lower-resolution images). The candidate templates in the lower level layers thus tend to have more common parts and fewer differences (feature quantities used for identification). With this tendency, high-speed matching is performed with the common template and the identification templates in the lower level layers other than the highest first layer.

Referring back to Fig. 5, the identification template generation unit 203 generates, for every image layer except the first layer (higher-resolution images), the common template that represents a common part of the plurality of standard templates, and the identification templates that represent differences between the plurality of templates, and stores these templates into the storage 204 (step S404). For the image of the highest first layer (lower-resolution image), the identification template generation unit 203 stores the standard templates generated by the standard template generation unit 202 into the storage 204 without generating a common template and identification templates (step S404). The standard templates, the common templates, and the identification templates stored in the storage 204 may be collectively referred to as template information when they may not be differentiated from one another.

### A-5. Object Recognition Process

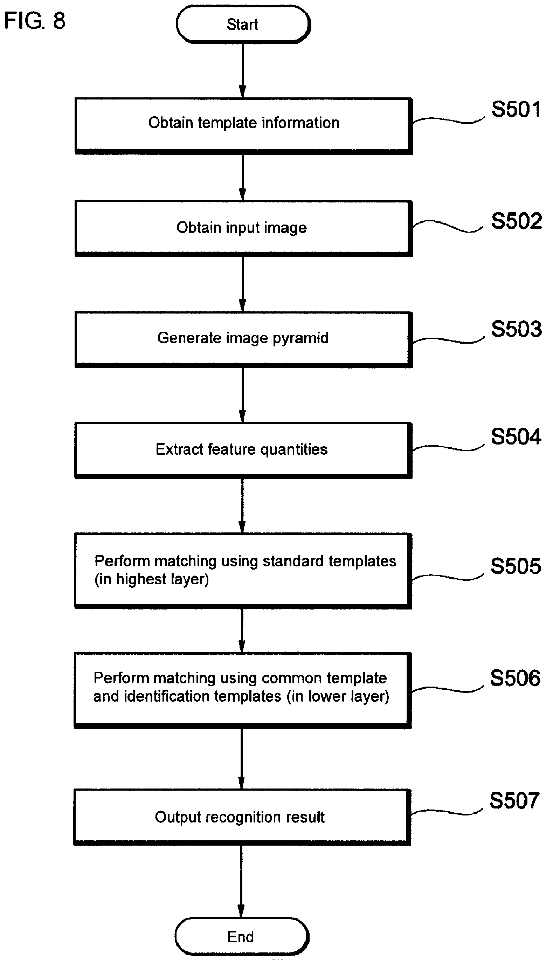

An object recognition process performed by the object recognition processor 30 will now be described with reference to the flowchart shown in Fig. 8.

The template information obtaining unit 301 first obtains the template information stored in the storage 204 in the template generation apparatus 20, and provides the template information to the template matching unit 305 (step S501).

The image obtaining unit 302 obtains an input image from the camera 11 (step S502). This image includes objects 2 captured with any postures.

The image pyramid generation unit 303 generates lower-resolution images based on the obtained input image (original image) to generate an image pyramid (step S503). For example, the image pyramid generation unit 303 generates an image pyramid including a first layer image with 160 × 120 pixels and a second layer image with 320 × 240 pixels.

The feature extraction unit 304 extracts feature quantities from the image of each layer included in the image pyramid (step S504). The feature quantities to be extracted are the same as the feature quantities of the template, and include quantized gradient orientations. The first layer image, which is the highest layer, undergoes the feature extraction to generate an image having the same resolution as the first layer image and having feature quantity data (feature values) extracted as pixel values at different pixel positions in the first layer image (hereafter, a first layer feature image). In the same manner, the second layer image undergoes the feature extraction to generate a second layer feature image.

The template matching unit 305 performs template matching using template information provided by the template information obtaining unit 301 and the feature quantities corresponding to the template information calculated by the feature extraction unit 304.

More specifically, a highest-layer template matching unit 305a first performs matching using the first layer feature image and the templates for the first layer (step S505). The highest-layer template matching unit 305a uses standard templates as the templates for the lowest-resolution first layer (refer to the first layer in Fig. 7). In the example shown in Fig. 7, the highest template matching unit 305a performs matching using the standard templates to detect one match candidate standard template (2 × 2 pixels), and transmits the detection result to a lower-layer template matching unit 305b.

The lower-layer template matching unit 305b uses the detection result received from the highest-layer template matching unit 305a to define a search scope in the second layer feature image, and performs matching using the second layer feature image and the templates for the second layer (step S506). The lower-layer template matching unit 305b uses, as lower layer templates, the common template among the templates and the identification templates representing the differences between the templates (refer to the second layer in Fig. 7). In the example shown in Fig. 7, the lower-layer template matching unit 305b performs matching using one common template (4 × 4 pixels) that is common to 20 standard templates and 20 identification templates (1 pixel) for identifying the standard templates.

As described above, the matching is performed 36 times in total, including 16 times (= 4 × 4) using the common template and 20 times (= 1 × 20) using the identification templates. This method thus shortens the processing time to about one tenth of the processing time achieved in the example known in the art (refer to Fig. 6) involving matching performed 340 times (= 17 × 20) using only standard templates. When the matching for a lower-resolution image using the standard templates produces a reliable matching result, lower level image layers may undergo matching using only identification templates without matching using a common template. In the example shown in Fig. 7, the matching using the common template (16 times) may be eliminated, and the matching using only the identification templates (20 times) may be performed. This enables even faster matching.

Although the lower-layer template matching unit 305b performs the matching of the second layer image in the above example, the lower-layer template matching unit 305b performs the same matching of any other layer images, such as a third layer image and a fourth layer image. For the third layer image, the lower-layer template matching unit 305b uses a matching result obtained for the second layer image to define a search scope in a third layer feature image and performs the matching using the third layer feature image and the templates for the third layer. These processes enable the position of an object to be determined in the lowest layer (the second layer in the example shown in Fig. 7).

The template matching unit 305 recognizes the position and posture of an object, and then outputs the resultant recognition information to the recognition output unit 306 (step S507). The recognition output unit 306 outputs the recognition information received from the template matching unit 305 to an external device or a liquid crystal panel. The recognition information is used to, for example, inspect and measure the objects 2 and to control a picking robot.

In the present embodiment, as described above, template matching including a coarse-to-fine search is performed using the common template representing a common part of the templates and the identification templates representing the differences between the templates in lower level layers. Matching using the identification templates representing only the differences between the plurality of standard templates enables faster processing than matching using the standard templates.

### B. Modifications

Although match candidate templates are narrowed to a single template for the highest level layer (lower-resolution image) (refer to the first layer in Fig. 7) in the above embodiment, the embodiment is not limited to this structure. For example, all the templates with a probability of matching with the lower-resolution image (the first layer image) greater than or equal to a threshold may be selected as match candidates, and may be used in matching with lower level layers (higher-resolution images) to obtain the intended match (e.g., the position and posture of an object).

When the matching result obtained for the lower-resolution image with the standard templates is unreliable, this matching result may be combined with the matching results obtained using a common template and identification templates in higher-resolution images to improve the accuracy of object recognition.

In the above embodiment, although the templates generated from three-dimensional CAD data are used to perform three-dimensional recognition of the position and posture of an object (or three-dimensional object recognition), this technique is also applicable to two-dimensional object recognition. For example, the technique is applicable to a bin picking system for recognizing the positions and postures of randomly stacked, overlapping objects (three-dimensional object recognition) and picking them one by one, or to a picking system for recognizing the positions and postures (rotations) of non-overlapping objects that are placed without being stacked on one another (two-dimensional object recognition) and picking them one by one.

In the above embodiment, although the technique is used in template matching using a coarse-to-fine search, the embodiment is not limited to the coarse-to-fine search for narrowing the position of an object. The technique is also applicable to hierarchical matching for narrowing the type and the posture of an object in a stepwise manner (without narrowing the position of an object).

The term unit as used herein does not merely refer to a physical component, but also to the function of the unit implemented by software. The function of a single unit or apparatus may be implemented by two or more physical components or apparatuses, or the functions of two or more units or apparatuses may be implemented by a single physical component or apparatus.

The steps in each of the above processes described herein can be performed in any order or in parallel while remaining consistent with the processing.

The program for implementing each processing described herein may be stored in a recording medium. The recording medium may be used to install the program in the image processing apparatus 10. The recording medium storing the program may be a non-transitory recording medium. The non-transitory recording medium may be any recording medium, such as a CD-ROM.

### Appendix 1

An image processing apparatus for recognizing an object by template matching, the apparatus comprising at least one hardware processor,
the hardware processor being configured to execute a predetermined program to function as:
an image obtaining unit configured to obtain an input image of the object;
a standard template generation unit configured to generate a plurality of standard templates corresponding to the object viewed from different points;
an identification template generation unit configured to generate a plurality of identification templates representing differences between the plurality of standard templates; and
a template matching unit configured to perform matching of the input image of the object with the plurality of identification templates.

### Appendix 2

An image processing method for recognizing an object by template matching, the method being implemented by at least one hardware processor, the method comprising:
obtaining an input image of an object;
generating a plurality of standard templates corresponding to the object viewed from different points; generating a plurality of identification templates representing differences between the plurality of standard templates; and
performing matching of the input image of the object with the plurality of identification templates.

### REFERENCE SIGNS LIST

- 1: object recognition apparatus
- 2: object
- 3: tray
- 4: PLC
- 10: image processing apparatus
- 11: camera
- 12: display
- 13: mouse
- 14: memory card
- 112: main memory
- 114: hard disk
- 116: camera interface
- 116a: image buffer
- 118: input interface
- 120: display controller
- 122: PLC interface
- 124: communication interface
- 126: data reader/writer
- 128: bus
- 20: template generation apparatus
- 201: 3D CAD data obtaining unit
- 202: standard template generation unit
- 203: identification template generation unit
- 204: storage
- 30: object recognition processor
- 301: template information obtaining unit
- 302: image obtaining unit
- 303: image pyramid generation unit
- 304: feature extraction unit
- 305: template matching unit
- 305a: highest-layer template matching unit
- 305b: lower-layer template matching unit
- 306: recognition output unit

## Claims

1. An image processing apparatus for recognizing an object by template matching, the apparatus comprising:
an image obtaining unit configured to obtain an input image of the object;
a standard template generation unit configured to generate a plurality of standard templates corresponding to the object viewed from different points;
an identification template generation unit configured to generate a plurality of identification templates representing differences between the plurality of standard templates; and
a template matching unit configured to perform matching of the input image of the object with the plurality of identification templates.

2. The image processing apparatus according to claim 1, wherein
the identification template generation unit generates, in addition to the plurality of identification templates, a common template representing a common part of the standard templates, and
the template matching unit performs matching of the input image of the object with the generated common template and the plurality of identification templates.

3. The image processing apparatus according to any one of the preceding claims, further comprising:
an image pyramid generation unit configured to generate, from the input image of the object, a plurality of images having resolutions that differ from one image to another in a stepwise manner, the plurality of images including a lower-resolution image having a resolution and a higher-resolution image having a resolution higher than the resolution of the lower-resolution image,
wherein the standard template generation unit generates a plurality of standard templates for a lower resolution corresponding to the lower-resolution image, and a plurality of standard templates for a higher resolution corresponding to the higher-resolution image,
the identification template generation unit generates a plurality of identification templates for the higher resolution based on the plurality of standard templates for the higher resolution, and
the template matching unit performs matching of the lower-resolution image with the plurality of standard templates for the lower resolution to narrow match candidate standard templates, defines a search scope in the higher-resolution image based on a result of the narrowing, and performs matching of the higher-resolution image within the defined search scope with the plurality of identification templates for the higher resolution.

4. The image processing apparatus according to claim 3, further comprising:
a feature extraction unit configured to extract a feature quantity from each of the lower-resolution image and the higher-resolution image,
wherein the template matching unit performs matching using the feature quantity of the lower-resolution image and the plurality of standard templates for the lower resolution to narrow match candidate standard templates, defines a search scope in the higher-resolution image based on a result of the narrowing, and performs matching using the feature quantity of the higher-resolution image within the defined search scope and the plurality of identification templates for the higher resolution.

5. The image processing apparatus according to claim 3 or claim 4, wherein
the image processing apparatus recognizes the object by template matching with a coarse-to-fine search.

6. An image processing method for recognizing an object by template matching, the method comprising:
obtaining an input image of the object;
generating a plurality of standard templates corresponding to the object viewed from different points;
generating a plurality of identification templates representing differences between the plurality of standard templates; and
performing matching of the input image of the object with the plurality of identification templates.

7. A program for enabling a computer to implement image processing for recognizing an object by template matching, the program enabling the computer to implement:
obtaining an input image of the object;
generating a plurality of standard templates corresponding to the object viewed from different points;
generating a plurality of identification templates representing differences between the plurality of standard templates; and
performing matching of the input image of the object with the plurality of identification templates.

8. A template generation apparatus for generating a template for template matching, the apparatus comprising:
a standard template generation unit configured to generate, based on an input image of an object being a matching target, a plurality of standard templates corresponding to the object viewed from different points; and
an identification template generation unit configured to generate a plurality of identification templates representing differences between the plurality of standard templates.

9. An object recognition processor for recognizing an object by template matching, comprising:
a template information obtaining unit configured to obtain, from an external unit, a plurality of identification templates representing differences between a plurality of standard templates corresponding to the object viewed from different points;
an image obtaining unit configured to obtain an input image of the object; and
a template matching unit configured to perform matching of the input image of the object with the plurality of obtained identification templates.
